# EUROPÄISCHE PATENTSCHRIFT

(11) **EP 3 559 523 B1**
(45) Veröffentlichungstag und Bekanntmachung des Hinweises auf die Patenterteilung: **23.06.2021**
(21) Anmeldenummer: 17816759.9
(22) Anmeldetag: 13.12.2017
(51) Int. Cl.: F16K 39/02, F02B 37/16, F16K 31/06

(54) **VENTIL**
VALVE
VANNE

(30) Priorität: 22.12.2016 DE 102016226095; 16.02.2017 DE 102017202511
(43) Veröffentlichungstag der Anmeldung: 30.10.2019
(73) Patentinhaber: Vitesco Technologies GmbH, 30165 Hannover (DE); Carl Freudenberg KG, 69469 Weinheim (DE)
(72) Erfinder: BONANNO, Rosario, 81737 München (DE); Preuner, Johannes, 69469 Weinheim (DE); Vasilico, Alexander, 69469 Weinheim (DE)
(86) Internationale Anmeldenummer: PCT/EP2017/082626
(87) Internationale Veröffentlichungsnummer: WO 2018/114525

(56) Entgegenhaltungen:
- WO-A1-2006/029814
- WO-A1-2016/041659
- WO-A1-2016/162968
- WO-A1-2017/141606
- DE-A1-102008 031 738
- DE-B3-102007 002 432
- DE-B3-102008 012 467
- DE-B3-102014 113 540
- US-A1- 2013 313 455

## Beschreibung

Gegenstand der Erfindung ist ein Ventil mit einem Gehäuse, einem in dem Gehäuse angeordneten Solenoid, einem von dem Solenoid bewegbaren Stift und einem mit dem Stift verbundenen topfförmigen Kolben und einer zwischen Gehäuse und Kolben angeordneten Dichtung.

Beispielsweise offenbart die US 2013/313455 A1 ein Ventil mit einem Gehäuse, einem zweiten Gehäuseteil und einem Kolben. Der Kolben ist einteilig und aus einem Material. Alternativ offenbart die DE 10 2008 031738 A1 ein Ventil mit einem Gehäuse, einem zweiten Gehäuseteil und einem Kolben. Der Kolben ist einteilig mit einem Dichtelement im Bereich seines Bodens ausgebildet. Die DE 10 2007 002432 B3 und die DE 10 2008 012467 B3 offenbaren ein Ventil mit einem Gehäuse, einem zweiten Gehäuseteil und einem Kolben. An dem Kolben sind Dichtungen angeordnet, welche jedoch nicht einteilig miteinander verbunden sind.

Solche Ventile werden unter anderem als Schubumluftventil am Turbolader in Kraftfahrzeugen eingesetzt, um im Schubbetrieb einen Bypass zur Saugseite freizugeben und sind somit bekannt. Um ein zu starkes Abbremsen des Turboladers zu verhindern aber auch ein schnelles Anfahren zu gewährleisten, ist ein schnelles Öffnen und Schließen des Ventils eine wesentliche Voraussetzung. Insbesondere beim Schließen kommt es auf das sofortige Verschließen durch das Anlegen des Kolbens an einen Ventilsitz an. Der Ventilsitz wird vom Gehäuse des Turboladers gebildet, an dem das Ventil angeflanscht wird. Darüber hinaus muss der axial verschiebliche Kolben gegen das Gehäuse abgedichtet sein. Hierzu ist es bekannt, in dem Gehäuse eine V-förmige Dichtung anzuordnen, deren Schenkel jeweils am Gehäuse und an der Mantelfläche des topfförmigen Kolbens anliegen. Durch die Vorspannung der beiden Schenkel wird die Dichtwirkung erzielt. Nachteilig hierbei ist, dass die am Kolben anliegende Dichtlippe des einen Schenkels infolge der Kolbenbewegung beim Öffnen und Schließen Reibung ausgesetzt ist, was einen erhöhten Verschleiß zur Folge hat.

Der Erfindung liegt daher die Aufgabe zugrunde, ein Ventil mit verbesserter Dichtfunktion zu schaffen.

Gelöst wird die Aufgabe dadurch, dass der Kolben zumindest im Bereich seines offenen Endes eine radial umlaufende Dichtung besitzt, die nur im geschlossenen Zustand des Ventils an einem zweiten Gehäuseteil anliegt, das zweite Gehäuseteil mit dem Gehäuse verbunden ist, die Dichtung aus Gummi besteht, der Kolben aus Metall besteht, der Kolben im Bereichs eines Bodens an der Außenseite eine weitere Dichtung besitzt und, die Dichtung im Bereich des offenen Endes und die weitere Dichtung im Bodenbereich einteilig miteinander verbunden sind.

Mit der Anordnung einer radial umlaufenden Dichtung am offenen Ende des Kolbens, die mit dem zweiten Gehäuseteil nur im geschlossenen Zustand zusammenwirkt, wird erreicht, dass die Abdichtung auf einen Zeitraum beschränkt wird, in der sich der Kolben in der Schließstellung befindet einschließlich eines Zeitraums unmittelbar bevor der Kolben zur Ruhe kommt. Damit ist gemeint, dass sich Kolben und Dichtung bereits kurz vor der Schließstellung berühren. Mit der letzten Bewegung des Kolbens in die Schließstellung wird die Dichtung so verformt, dass sie das zweite Gehäuseteil berührt und dabei vorgespannt wird. Mit der axial wirkenden Dichtung wird daher verhindert, dass die Dichtung während der Bewegung des Kolbens beim Öffnen und Schließen in Kontakt mit dem zweiten Gehäuseteil ist und einer damit einhergehenden Reibung ausgesetzt ist. Ein reibungsbedingter Verschleiß wird somit verhindert und die Lebensdauer der Dichtung verbessert.

Eine besonders gute Dichtwirkung einer solchen axial wirkenden Dichtung wird dadurch erreicht, dass die Dichtung zumindest eine Dichtlippe aufweist, die nach radial außen und zum Boden des topfförmigen Kolbens gerichtet ist und mit einer Dichtfläche des zweiten Gehäuseteils in Kontakt tritt, wobei die Dichtfläche an einem radial nach innen weisenden Kragen angeordnet ist.

Eine gute Medienbeständigkeit der Dichtung ist mit der Verwendung von Gummi, vorzugsweise einem Fluorkautschuk als Dichtungsmaterial gegeben. Ein weiterer Vorteil besteht darin, dass eine derartige Gummidichtung bis zu 180 °C temperaturbeständig ist.

In einer einfachen Ausgestaltung ist die Dichtung am offenen Ende des Kolbens angeordnet. Entsprechend der Einbausituation und der Betriebsbedingungen müssen die Bestandteile des Ventils, z. B. Solenoid, Gehäuse, Feder, Kolben, entsprechend ausgelegt werden. Das kann zur Folge haben, dass der Kolben eine gewisse Höhe aufweisen muss, was eine entsprechend große Ausbildung der Dichtung nach sich ziehen würde. Hierbei hat es sich als vorteilhaft herausgestellt, die Dichtung nicht ausschließlich am offenen Ende, sondern in einem am offenen Ende befindlichen Bereich anzuordnen der bis zu 30 % der Kolbenhöhe beträgt. Das hat den Vorteil, dass die Dichtung auch unterhalb des offenen Endes an der Mantelfläche des Kolbens angeordnet sein kann, was eine kleinere Dimensionierung der Dichtung, insbesondere der Dichtlippe, ermöglicht.

Eine größere Beständigkeit gegenüber aggressiven Medien und damit eine längere Lebensdauer sind gegeben, wenn der Kolben aus Edelstahl, vorzugsweise einem Chrom-Nickel-Stahl, besteht. Ein Metallkolben hat zudem den Vorteil einer höheren Temperaturbeständigkeit, so dass das erfindungsgemäße Ventil ein breiteres Einsatzgebiet, insbesondere bei höheren Temperaturen, abdecken kann.

Aufgrund der höheren Stabilität von Metall gegenüber Kunststoff, kann die Wandstärke des Kolbens deutlich geringer ausgebildet werden. In Abhängigkeit vom Einsatzgebiet hat es sich als vorteilhaft herausgestellt, wenn das Metall des Kolbens eine Dicke von 0,3 mm bis 1 mm, vorzugsweise von 0,4 mm bis 0,8 mm und insbesondere von 0,5 mm, besitzt.

Der Kolben lässt gemäß einer weiteren vorteilhaften Ausgestaltung, besonders kostengünstig in einem Arbeitsschritt herstellen, wenn der Kolben ein Tiefziehteil ist.

Die Abdichtung der Bypassleitung eines Turboladers lässt sich besonders einfach bewerkstelligen, wenn der Kolben im Bereich seines Bodens an der Außenseite eine weitere Dichtung besitzt.

Die Verbindung der weiteren Dichtung mit dem Kolben gestaltet sich gemäß einer vorteilhaften Ausgestaltung besonders einfach, wenn der Boden des Kolbens im Bereich der ringförmigen Dichtung mindestens 3, vorzugsweise 4 bis 12 und insbesondere 5 bis 8 Ausnehmungen aufweist, und sich die Dichtung durch die Ausnehmungen bis auf die Innenseite des Bodens erstreckt.

Der Aufwand zum Anordnen der beiden Dichtungen lässt sich gemäß einer besonders vorteilhaften Ausgestaltung dadurch verringern, dass die Dichtung im Bereich des offenen Endes und die weitere Dichtung im Bodenbereich einteilig miteinander verbunden sind. Auf diese Weise werden beide Dichtungen in nur einem Arbeitsschritt mit dem Kolben verbunden. Eine zusätzliche Montage der Dichtungen kann damit entfallen. Zudem reduzieren sich die Anzahl der Bauteile und die Komplexität eines solchen Kolbens.

Die einteilige Verbindung der beiden Dichtungen kann im einfachsten Fall über die Außenseite der zylindrischen Mantelfläche des Kolbens erfolgen. In diesem Fall ist der Kolben außen durch das Dichtungsmaterial geschützt. Es ist aber auch denkbar, die Verbindung der beiden Dichtungen so auszubilden, dass das Dichtungsmaterial die Innenseite der zylindrischen Mantelfläche des Kolbens bedeckt.

In einer anderen Ausgestaltung ist die Verbindung der beiden Dichtungen so gestaltet, dass das Dichtungsmaterial die zylindrische Mantelfläche sowohl innen als auch außen bedeckt. Der Kolben ist damit im besagten Bereich vom Dichtungsmaterial umhüllt und somit zusätzlich geschützt.

Eine zuverlässige Verbindung der zumindest einen Dichtung im Bereich des offenen Endes wird gemäß eine weiteren Ausgestaltung durch das Aufvulkanisieren auf den Kolben erreicht.

Es hat sich weiter als vorteilhaft herausgestellt, wenn das zweite Gehäuseteil aus Metall, vorzugsweise einem Edelstahl, insbesondere einem Chrom-Nickel-Stahl besteht. Das erlaubt die Ausbildung des zweiten Gehäuseteils als Tiefziehteil und damit eine besonders kostengünstige Herstellung. So kann auch der die Dichtfläche für die am Kolben angeordnete Dichtung aufweisende Kragen im gleichen Herstellungsprozess gefertigt werden.

An einem Ausführungsbeispiel wird die Erfindung näher beschrieben. Es zeigt in
- Fig. 1: eine Schnittdarstellung eines Ventils nach dem Stand der Technik,
- Fig. 2: eine Schnittdarstellung eines erfindungsgemäßen Ventils und
- Fig. 3: eine weitere Ausführungsform nach Fig. 2.

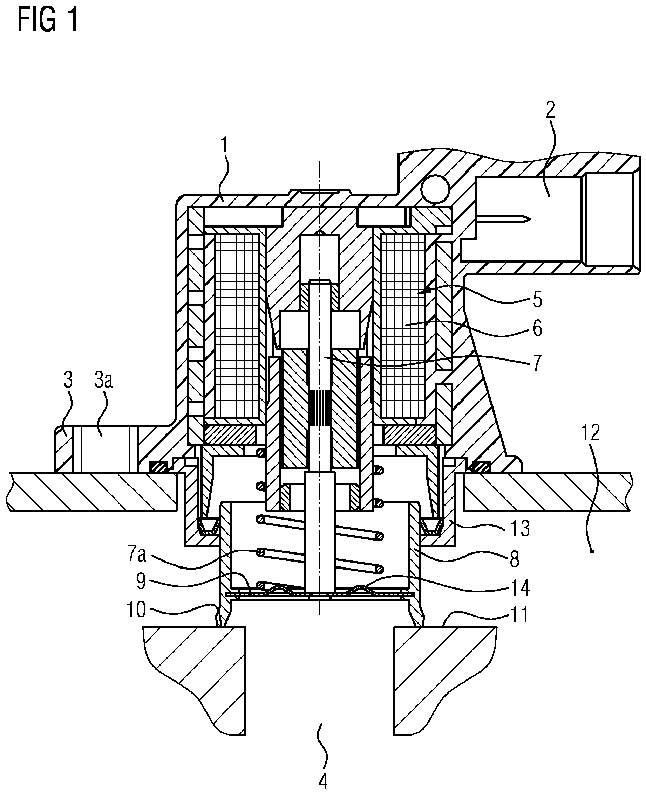

Figur 1 zeigt das Ventil, umfassend ein Gehäuse 1 mit einteilig angeformter Buchse 2 zum elektrischen Verbinden des Ventils. Das Gehäuse 1 besitzt weiter einen angeformten Flansch 3 und drei Bohrungen 3a, über die das Gehäuse 1 an einem nicht dargestellten Turbolader im Bereich der Bypassleitung 4 angeflanscht ist. In der gezeigten Einbaulage schließt sich an den Flansch 3 ein zweites Gehäuseteil 13 an. In dem Gehäuse 1 ist ein Solenoid 5 mit einer Spule 6 und einem Metallstift 7 angeordnet. Der Metallstift 7 ist mit einem topfförmigen Kolben 8 verbunden, der am Umfang seines Bodens 9 eine axial abstehende ringförmige Dichtfläche 10 besitzt. In der gezeigten Schließstellung liegt die Dichtfläche 10 auf dem Ventilsitz 11 an, um die Bypassleitung 4 zu verschließen, so dass kein Medium von aus der Leitung 4 in die Leitung 12 strömen kann. Eine Feder 7a drückt dabei den Kolben 8 in Richtung Ventilsitz 11. Gegen die von der Feder 7a erzeugte Kraft wirkt die aufgrund des Drucks in der Leitung 12 auf den Boden 9 wirkende Kraft.

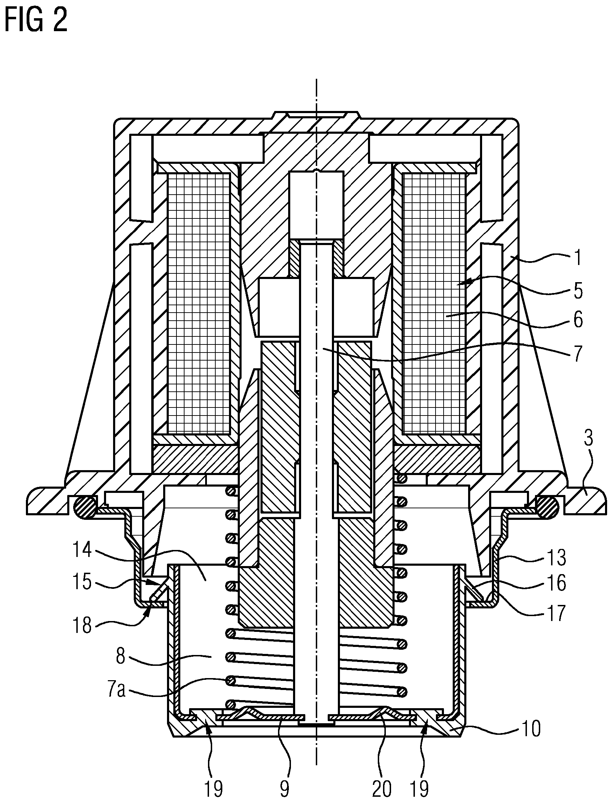

Figur 2 zeigt das Ventil mit einem aus einem Chrom-Nickel-Stahl bestehenden topfförmigen Kolben 8 mit einer Wandstärke von 0,5 mm. Im Bereich 14 des offenen Endes ist eine Dichtung 15 aus einem Fluorkautschuk angeordnet. Die Dichtung 15 besitzt eine Dichtlippe 16, die nach radial außen und zum Boden 9 des topfförmigen Kolbens 8 gerichtet ist und mit einer Dichtfläche 17 des zweiten Gehäuseteils 13 in Kontakt tritt, wobei die Dichtfläche 17 an einem radial nach innen weisenden Kragen 18 angeordnet ist. Das zweite Gehäuseteil 13 ist, wie der Kolben 8, ein Tiefziehteil und besteht ebenfalls besteht aus einem Chrom-Nickel-Stahl. Der Boden 9 des Kolbens besitzt acht Ausnehmungen 19, die von der weiteren Dichtung 10 durchdrungen werden, so dass sich die ringförmige und an der Außenseite des Bodens 9 angeordnete weitere Dichtung 10 bis auf die Innenseite des Bodens erstreckt. Die Ausnehmungen 19 bilden dabei eine Art Hinterschnitt für die weitere Dichtung 10, so dass diese unverlierbar mit dem Kolben 8 verbunden ist. Die weitere Dichtung 10 ist gleichzeitig noch mit der Dichtung 15 derart einteilig verbunden, dass die Außenseite zylindrische Mantelfläche des Kolbens mit einer 0,5 mm dicken Schicht aus Fluorkautschuk bedeckt ist. Eine im Boden 9 befindliche Sicke 20 dient zur Führung und Zentrierung der Feder 7a. Nicht dargestellte Öffnungen im Boden 9 ermöglichen einen Druckausgleich mit dem Inneren des Ventils, um ein leichteres Öffnen zu ermöglichen.

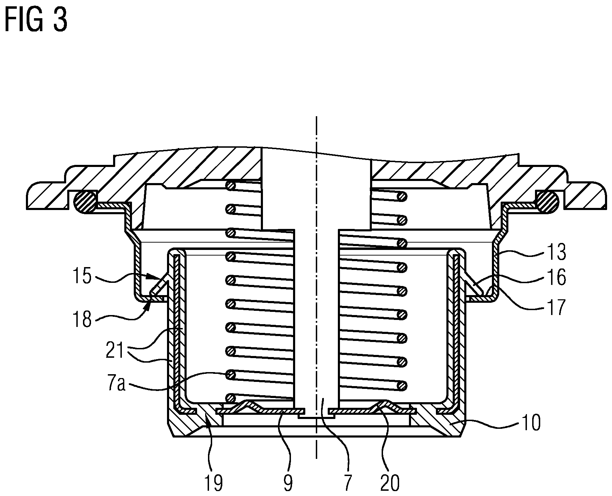

Die vergrößerte Darstellung des erfindungsgemäßen Ventils im Bereich des Kolbens in Figur 3 entspricht vom Grundaufbau dem Ventil in Fig. 2. Die beiden Dichtungen 10, 15 sind ebenfalls einteilig miteinander verbunden, wobei das Dichtungsmaterial 21 die zylindrische Mantelfläche des Kolbens 8 sowohl innen als auch außen bedeckt. Der Kolben 8 ist damit im besagten Bereich vom Dichtungsmaterial 21 umhüllt.

## Patentansprüche

1. Ventil mit einem Gehäuse, einem in dem Gehäuse angeordneten Solenoid, einem von dem Solenoid bewegbaren Stift, einem mit dem Stift verbundenen topfförmigen Kolben und einer zwischen Gehäuse und Kolben angeordneten Dichtung, wobei der Kolben (8) zumindest im Bereich seines offenen Endes (14) eine radial umlaufende Dichtung (15) besitzt, die im geschlossenen Zustand des Ventils an einem zweiten Gehäuseteil (13) anliegt und das zweite Gehäuseteil (13) mit dem Gehäuse (1) verbunden ist **dadurch gekennzeichnet, dass** die Dichtung (15) aus einem Gummi, vorzugsweise einem Fluorkautschuk besteht, der Kolben (8) aus Metall, vorzugsweise einem Edelstahl, insbesondere einem Chrom-Nickel-Stahl, besteht, der Kolben(8) im Bereich seines Bodens (9) an der Außenseite eine weitere Dichtung (10) besitzt und die Dichtung (15) im Bereich des offenen Endes (14) und die weitere Dichtung (10) im Bodenbereich (9) einteilig miteinander verbunden sind.

2. Ventil nach Anspruch 1, **dadurch gekennzeichnet, dass** die Dichtung (15) zumindest eine Dichtlippe (16) aufweist, die nach radial außen und zum Boden (9) des topfförmigen Kolbens (8) gerichtet ist und mit einer Dichtfläche (17) des zweiten Gehäuseteils (13) in Kontakt tritt, wobei die Dichtfläche (17) an einem radial nach innen weisenden Kragen (18) angeordnet ist.

3. Ventil nach zumindest einem der vorhergehenden Ansprüche, **dadurch gekennzeichnet, dass** der Bereich (14), in dem die Dichtung (15) angeordnet ist, bis zu 30 % der Kolbenhöhe beträgt.

4. Ventil nach Anspruch 1, **dadurch gekennzeichnet, dass** der Kolben (8) eine Wandstärke von 0,3 mm bis 1 mm, vorzugsweise von 0,4 mm bis 0,8 mm, insbesondere 0,5 mm besitzt.

5. Ventil nach Anspruch 1 oder 4, **dadurch gekennzeichnet, dass** der Kolben (8) ein Tiefziehteil ist.

6. Ventil nach Anspruch 1, **dadurch gekennzeichnet, dass** die beiden Dichtungen (15, 10) so miteinander einteilig verbunden sind, dass das Dichtungsmaterial (21) die zylindrische Mantelfläche des Kolbens (8) sowohl innen als auch außen bedeckt.

7. Ventil nach zumindest einem der vorhergehenden Ansprüche, **dadurch gekennzeichnet, dass** zumindest die Dichtung (15) im Bereich des offenen Endes (14) aufvulkanisiert ist.

8. Ventil nach zumindest einem der vorhergehenden Ansprüche, **dadurch gekennzeichnet, dass** das zweite Gehäuseteil (13) aus Metall, vorzugsweise einem Edelstahl, insbesondere einem Chrom-Nickel-Stahl, besteht.

## Claims

1. Valve having a housing, a solenoid arranged in the housing, a pin movable by the solenoid, a pot-shaped piston connected to the pin, and a seal arranged between the housing and the piston, wherein the piston (8) has, at least in the region of its open end (14), a radially peripheral seal (15) that bears against a second housing part (13) when the valve is closed, said second housing part (13) being connected to the housing (1), **characterized in that** the seal (15) is composed of a rubber, preferably a fluoro rubber, the piston (8) is composed of metal, preferably of a high-grade steel, in particular a chromium-nickel steel, the piston (8) has a further seal (10) on the outside in the region of its base (9), and the seal (15) and the further seal (10) are connected integrally to one another in the region of the open end (14) and in the base region (9), respectively.

2. Valve according to Claim 1, **characterized in that** the seal (15) has at least one sealing lip (16), which is directed radially outward and toward the base (9) of the pot-shaped piston (8) and comes into contact with a sealing surface (17) of the second housing part (13), wherein the sealing surface (17) is arranged on a radially inward-facing collar (18).

3. Valve according to at least one of the preceding claims, **characterized in that** the region (14) in which the seal (15) is arranged accounts for up to 30% of the piston height.

4. Valve according to Claim 1, **characterized in that** the piston (8) has a wall thickness of 0.3 mm to 1 mm, preferably of 0.4 mm to 0.8 mm, in particular 0.5 mm.

5. Valve according to Claim 1 or 4, **characterized in that** the piston (8) is a deep-drawn part.

6. Valve according to Claim 1, **characterized in that** the two seals (15, 10) are connected integrally to one another in such a way that the seal material (21) covers the cylindrical lateral surface of the piston (8) both on the inside and on the outside.

7. Valve according to at least one of the preceding claims, **characterized in that** at least the seal (15) is vulcanized on in the region of the open end (14).

8. Valve according to at least one of the preceding claims, **characterized in that** the second housing part (13) is composed of metal, preferably of a high-grade steel, in particular a chromium-nickel steel.

## Revendications

1. Vanne comprenant un boîtier, un solénoïde disposé dans le boîtier, une tige pouvant être déplacée par l'électro-aimant, un piston en forme de pot relié à la tige et une garniture d'étanchéité disposée entre le boîtier et le piston, le piston (8) comportant au moins au niveau de son extrémité ouverte (14) une garniture d'étanchéité (15) radialement circonférentielle qui, lorsque la vanne est fermée, vient en appui sur une deuxième partie de boîtier (13) et la deuxième partie de boîtier (13) étant reliée au boîtier (1), **caractérisée en ce que** la garniture d'étanchéité (15) est en caoutchouc, de préférence en caoutchouc fluoré, le piston (8) est en métal, de préférence en acier inoxydable, en particulier en acier au chrome-nickel, le piston (8) possède au niveau de son fond (9) du côté extérieur une autre garniture d'étanchéité (10) et la garniture d'étanchéité (15) au niveau de l'extrémité ouverte (14) et l'autre garniture d'étanchéité (10) au niveau du fond (9) sont reliées d'une seule pièce l'une à l'autre.

2. Vanne selon la revendication 1, **caractérisée en ce que** la garniture d'étanchéité (15) comporte au moins une lèvre d'étanchéité (16) qui est dirigée radialement vers l'extérieur et vers le fond (9) du piston (8) en forme de pot et vient en contact avec une surface d'étanchéité (17) de la deuxième partie de boîtier (13), la surface d'étanchéité (17) étant disposée sur un rebord (18) orienté radialement vers l'intérieur.

3. Vanne selon l'une au moins des revendications précédentes, **caractérisée en ce que** la zone (14), dans laquelle est disposé la garniture d'étanchéité (15), représente jusqu'à 30 % de la hauteur du piston.

4. Vanne selon la revendication 1, **caractérisée en ce que** le piston (8) a une épaisseur de paroi de 0,3 mm à 1 mm, de préférence 0,4 mm à 0,8 mm, en particulier de 0,5 mm.

5. Vanne selon la revendication 1 ou 4, **caractérisée en ce que** le piston (8) est une pièce emboutie.

6. Vanne selon la revendication 1, **caractérisée en ce que** les deux garnitures d'étanchéité (15, 10) sont reliées d'une seule pièce l'un à l'autre de telle sorte que le matériau de garniture d'étanchéité (21) recouvre la surface latérale cylindrique du piston (8) aussi bien à l'intérieur qu'à l'extérieur.

7. Vanne selon l'une au moins des revendications précédentes, **caractérisée en ce qu'**au moins la garniture d'étanchéité (15) est vulcanisée au niveau de l'extrémité ouverte (14).

8. Vanne selon l'une au moins des revendications précédentes, **caractérisée en ce que** la deuxième partie de boîtier (13) est en métal, de préférence en acier inoxydable, en particulier en acier au chrome-nickel.
